(19) Europäisches Patentamt
European Patent Office
Office européen des brevets

(11) Veröffentlichungsnummer: **0 013 941**
**B1**

# (12) EUROPÄISCHE PATENTSCHRIFT

(45) Veröffentlichungstag der Patentschrift: **23.06.82**

(51) Int. Cl.³: **C 08 L 67/02,** C 08 L 51/06

(21) Anmeldenummer: **80100213.0**

(22) Anmeldetag: **17.01.80**

(54) **Thermoplastische Polyesterformmassen mit hoher Zähigkeit, Verfahren zu ihrer Herstellung und ihre Verwendung zur Herstellung von Formkörpern.**

(30) Priorität: **23.01.79 DE 2902468**

(43) Veröffentlichungstag der Anmeldung: **06.08.80 Patentblatt 80/16**

(45) Bekanntmachung des Hinweises auf die Patenterteilung: **23.06.82 Patentblatt 82/25**

(84) Benannte Vertragsstaaten: **DE FR GB IT**

(56) Entgegenhaltungen:
**DE-A-2 348 377**
**FR-A-2 285 435**
**FR-A-2 291 249**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Binsack, Rudolf, Dr., Bethelstrasse 4a, D-4150 Krefeld (DE)**
Erfinder: **Rempel, Dieter, Dr., Max-Beckmann-Strasse 35, D-5090 Leverkusen (DE)**
Erfinder: **Korber, Helmut, Dr., In der Hildscheid 18, D-5068 Odenthal (DE)**
Erfinder: **Neuray, Dieter, Dr., Buschstrasse 149, D-4150 Krefeld (DE)**

**EP 0 013 941 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Thermoplastische Polyesterformmassen mit hoher Zähigkeit, Verfahren zu ihrer Herstellung und ihre Verwendung zur Herstellung von Formkörpern

Die vorliegende Erfindung betrifft Formmassen bestehend aus homogenen Mischungen aus thermoplastischen Polyestern, insbesondere Polyalkylenterephthalaten, und gepfropften Polyolefinen.

»Homogen« in diesem Zusammenhang bedeutet, daß die Teilchen des Pfropfpolymerisats gleichmäßig über die Polymermatrix verteilt sind und der Durchmesser dieser Teilchen unter 40 µm, in der Regel unter 20 µm, liegt.

Thermoplastische Polyester, insbesondere Polyethylenterephthalat und Polybutylenterephthalat, zeichnen sich als thermoplastische Formmassen durch eine Vielzahl von wertvollen technologischen Eigenschaften, wie z. B. Steifigkeit, Härte, Abriebfestigkeit, dynamische und thermische Belastbarkeit aus. Ein anderer Vorteil, der den thermoplastischen Polyestern einen wichtigen Platz unter den Konstruktionswerkstoffen gesichert hat, ist ihre schnelle Verarbeitbarkeit zu komplizierten und großen Formteilen. Dies trifft insbesondere für Polybutylenterephthalat zu.

Thermoplastische Polyester weisen jedoch einen gewissen Mangel an Zähigkeit auf. Dies gilt insbesondere für die zweidimensionale Zähigkeit, wie sie bei Gehäuseteilen von entscheidender Bedeutung ist.

Es existieren zahlreiche Vorschläge, die Zähigkeit thermoplastischer Polyester durch Zumischen oder Einkondensieren anderer Polymerer, insbesondere solcher auf Basis modifizierter Elastomerer und und Polyolefine, anzuheben (DE-OS 1 694 173, 1 928 369, DE-AS 1 961 226, 1 962 855, DE-OS 2 035 390, 2 248 242, 2 310 034, 2 348 377, 2 357 406, 2 364 318, US 3 236 914, 3 723 574). Den vorgeschlagenen Maßnahmen haftet jedoch der Nachteil an, daß die Zähigkeitsverbesserung mit einer Verschlechterung anderer, z. B. der oben genannten, Eigenschaften einhergeht.

Sofern man bislang Pfropfpolymerisate zur Modifizierung thermoplastischer Polyester eingesetzt hat, handelt es sich um die auf übliche Weise hergestellten Produkte, die pro ca. 20 000 bis 30 000 Kohlenstoffatome jeweils eine Pfropfstelle enthalten, wobei das als Gewichtsmittel bestimmte mittlere Molekulargewicht $M_w$ der Pfropfäste im allgemeinen zwischen 100 000 und 1 000 000 liegt.

Überraschenderweise wurde nun gefunden, daß man eine Zähigkeitsverbesserung ohne wesentliche Nachteile dann erhält, wenn man den thermoplastischen Polyestern eine neue Art von Pfropfpolymerisaten zusetzt, die pro ca. 400 bis 2000 Kohlenstoffatome eine Pfropfstelle aufweisen, wobei das mittlere Molekulargewicht $M_w$ der Pfropfäste 2000 bis 40 000 beträgt.

Nach einem sehr rationellen neuen Verfahren wird die Pfropfgrundlage nicht, wie bisher üblich, als Lösung oder als Latex eingesetzt. Eine langandauernde Quellung der Pfropfgrundlage durch Pfropfmonomere, wie in der DE-OS 2 454 770 beschrieben, ist ebenfalls nicht erforderlich. Vielmehr wird die Polyolefin-Pfropfgrundlage im geschmolzenen Zustand unter intensiver Durchmischung, vorzugsweise in einem Extruder, in erster Stufe mit Sauerstoff umgesetzt, wobei Peroxidgruppen gebildet werden. In einer zweiten Stufe, vorzugsweise bei demselben Extruderdurchgang, erfolgt die Aufpfropfung der radikalisch polymerisierbaren Vinylverbindungen auf die Polyolefin-Pfropfgrundlage, wozu die in der ersten Stufe entstandenen Peroxidgruppen die Initiatorradikale liefern.

Gegenstand der vorliegenden Erfindung sind also Mischungen aus

1. 60–99 Gew.-%, vorzugsweise 75–97 Gew.-%, thermoplastischer Polyester und
2. 1–40 Gew.-%, vorzugsweise 3–25 Gew.-%, von Polyolefinpfropfpolymerisat, erhältlich aus
   a) 70–99 Gew.-%, vorzugsweise 75–97 Gew.-%, einer Pfropfgrundlage bestehend aus einem Homopolymerisat von aliphatischen und/oder aromatischen Monoolefinen oder einem Copolymerisat aus diesen Olefinen, bis zu 50 Gew.-% anderer mono-olefinisch ungesättigter, radikalisch polymerisierbarer Verbindungen und/oder bis zu 5 Gew.-% Diolefinen, und
   b) 1–30 Gew.-%, vorzugsweise 3–25 Gew.-% radikalisch pfropfbarer ethylenisch ungesättigter Verbindungen, wobei sich die unter 1) und 2) genannten Prozentangaben auf die Summe der Komponenten 1) und 2), die in der ersten Zeile von a) und b) genannten Prozentangaben auf die Summe der Komponenten a) und b) und die restlichen unter a) gemachten Prozentangaben auf die Summe der für die Herstellung der Pfropfgrundlage verwandten Ausgangsmonomeren beziehen, dadurch gekennzeichnet, daß die Polyolefinpfropfpolymerisate 2) pro 400–2000 Kohlenstoffatome eine Pfropfstelle aufweisen und daß die Pfropfäste ein mittleres Molekulargewicht $\overline{M}_w$ von 2000 bis 40 000 besitzen, wobei die Polyolefinpfropfpolymeriste 2) derart hergestellt worden sind, daß man die Schmelze der Pfropfgrundlage a) unter einem Druck von 1–150 bar bei einer Temperatur von 80–300°C mit Sauerstoff oder Sauerstoff-haltigen Gasen unter intensiver Durchmischung maximal 10 Minuten in Kontakt bringt, unmittelbar danach bei Abwesenheit von Sauerstoff bzw. Sauerstoff-haltigem Gas unter intensiver Durchmischung die aufzupfropfenden ethylenisch ungesättigten Verbindungen b) zufügt und nach der Pfropfpolymerisation die Restmonomeren entfernt.

»Mischungen« im Zusammenhang »Mischungen aus thermoplastischem Polyester und Polyolefinpfropfpolymerisat« schließt eine normalerweise zum Teil ablaufende Pfropfung ein. Sie kann durch

präparative Fraktionierung mit entmischenden Lösungsmitteln und anschließende Analyse der Fraktionen nachgewiesen werden.

Als Polyolefin-Pfropfgrundlage a) sind alle aliphatischen und aromatischen Polyolefine, wie z. B. Polyethylen, Polypropylen, Polybuten, Polystyrol sowie deren Copolymerisate, wie z. B. Copolymerisate aus Ethylen und Propylen oder Styrol und Acrylnitril, geeignet. Die Polyolefine können darüber hinaus bis zu 5 Gew.-% Reste von Diolefinen sowie bis zu 50 Gew.-% Reste radikalisch copolymerisierbarer Vinylverbindungen enthalten, insbesondere solcher auf Basis von Vinylestern, vorzugsweise Vinylacetat, bzw. ungesättigten Carbonsäuren und/oder deren Derivaten.

Bevorzugte ungesättigte Carbonsäuren bzw. Säurederivate sind Acrylsäure und Methacrylsäure bzw. deren Ester und Amide, insbesondere die Methyl-, Ethyl-, n- und iso-Propyl, n-, iso-, sek.- und tert.-Butyl-, 2-Ethylhexyl- und Cyclohexyl-Ester dieser Säuren.

Bevorzugte Pfropfmonomere b) sind beispielsweise Acrylsäure, Methacrylsäure, die Methyl-, Ethyl-, n- und iso-Propyl, n-, iso-, sek.- und tert.-Butyl-, 2-Ethylhexyl- und Cyclohexyl-Ester dieser Säuren, (Meth)acrylamid, Vinylacetat, Styrol, Maleinsäureanhydrid und Acrylnitril.

Die Menge des in der ersten Stufe des Pfropfverfahrens eingefügten aktiven Sauerstoffs (Peroxidgruppen) kann ca. 1000 bis 10 000 ppm betragen. Während der Peroxidbildung tritt keine nennenswerte Verringerung des Molekulargewichtes der Pfropfgrundlage ein. Die aktivierten Stellen sind gleichmäßig über die Makromoleküle der Pfropfgrundlage verteilt, so daß im Gegensatz zu den Pfropfpolymerisationsverfahren des Standes der Technik sehr viele aktive Stellen zur Verfügung stehen. Daraus resultieren in der sich anschließenden Pfropfpolymerisation viele verhältnismäßig kurze Seitenketten.

Besonders bevorzugte Pfropfmonomere b) sind n-Butylacrylat, iso-Butylacrylat, tert.-Butylacrylat, Acrylnitril und Styrol.

Die Analytik der Polyolefinpfropfpolymerisate 2) sei nachfolgend am Beispiel eines mit Butylacrylat und Acrylsäure gepfropften Polyethylens erläutert:

Das Polyethylenpfropfpolymerisat wird bei höherer Temperatur in einer Mischung der sich bei Raumtemperatur entmischenden Lösungsmittel Dimethylformamid und Methylcyclohexan gelöst und aus homogener Lösung bei 25° C fraktioniert; vgl. R. Kuhn, Makromolekulare Chemie 177, 1525 (1976). Hierbei werden nicht aufgepfropftes Butylacrylat/Acrylsäure-Copolymerisat in der unteren, Dimethylformamid-reichen Phase und ungepfropftes Polyethylen und mit Butylacrylat und Acrylsäure gepfropftes Polyethylen in der oberen Phase gefunden.

Aus der Menge des nicht aufgepfropften Butylacrylat/Acrylsäure-Copolymerisats C und aller aufgepfropften und nicht aufgepfropften Butylacrylat/Acrylsäure-Copolymerisatanteile $C_G$ läßt sich die Pfropfausbeute

$$\frac{C_G - C}{C_G}$$

bestimmen. Die Pfropfausbeuten liegen im allgemeinen zwischen 50 und 90%.

Vom nicht aufgepfropften Butylacrylat/Acrylsäure-Copolymerisat werden Gelchromatogramme (Lösungsmittel: Tetrahydrofuran) erstellt, die Grenzviskositäten in Tetrahydrofuran ermittelt und hieraus über eine universelle Eichbeziehung die Molekulargewichte $M_w$ bestimmt; vgl. Hoffmann, H. Krömer, R. Kuhn, Polymeranalytik I, Georg Thieme Verlag, Stuttgart 1977. Die Molekulargewichte des Copolymerisats C entsprechen den Molekulargewichten der Pfropfäste.

Die als thermoplastische Polyester 1) besonders bevorzugten Polyalkylenterephthalate enthalten mindestens 90 Mol-%, bezogen auf die Dicarbonsäurekomponente, Terephthalsäurereste und mindestens 90 Mol-%, bezogen auf die Diolkomponente, Reste eines Diols der Formel

$$Ho(CH_2)_nOH$$

worin n eine ganze Zahl von 2 bis 10 bedeutet.

Die Polyalkylenterephthalate 1) können neben Terephthalsäureresten bis zu 10 Mol-% Reste anderer aromatischer, aliphatischer oder cycloaliphatischer Dicarbonsäure, z. B. Bernsteinsäure-, Adipinsäure-, Isophthalsäurereste, enthalten; sie können neben Resten eines Diols der obigen Formel bis zu 10 Mol-% Reste eines anderen Diols enthalten, wobei dieses andere Diol ebenfalls unter die obige Formel fallen kann. Es können aber z. B. auch bis zu 10 Mol-% alkylsubstituierter Diole, wie Neopentylglykol, 2,2,4-Trimethylhexandiol-1,6, 2-Ethyl-propandiol-1,3, 2,2,4-Trimethylpentandiol-1,3, 2-Methyl-pentandiol-2,4, 3-Methylpentandiol-2,4, 2-Ethylhexandiol-1,3 eingebaut werden.

Die Polyalkylenterephthalate können auch durch verzweigend wirkende Verbindungen, wie Polycarbonsäuren bzw. Polyole, verzweigt sein.

Bevorzugte Polyalkylenterephthalate sind Polyethylenterephthalat und insbesondere Polybutylenterephthalat.

Die als Komponente 1) verwendeten Polyalkylenterephthalate besitzen im allgemeinen eine Intrinsic-Viskosität von 0,6 bis 1,5 dl/g, gemessen in Phenol/o-Dichlorbenzol (1 : 1 Gewichtsteile).

Die Herstellung der erfindungsgemäßen Mischungen kann in den üblichen Mischaggregaten wie

Kneter, Ein- und Mehrwellenextruder erfolgen. Besonders geeignet sind Doppelwellenextruder. Die Komponenten 1) und 2) sind ausgezeichnet miteinander verträglich.

Formkörper aus den erfindungsgemäßen Formmassen zeigen eine gute Oberflächenbeschaffenheit, eine sehr gute Zähigkeit und ausgezeichnete Wärmeformbeständigkeit, insbesondere eine sehr gute zweidimensionale Zähigkeit und eine sehr gute Beständigkeit bei Heißluftalterung.

Die genannten Vorteile der erfindungsgemäßen Formmassen sind wahrscheinlich darauf zurückzuführen, daß zumindest ein Teil der verwendeten Polyolefin-Pfropfpolymerisate auf den Polyester aufgepfropft wird.

Die erfindungsgemäßen Formmassen können selbstverständlich auch die üblichen Füll- und Verstärkungsstoffe, Verarbeitungshilfsmittel, Nukleierungsmittel, Farbstoffe und Stabilisatoren enthalten. Außerdem können sie flammfest ausgerüstet sein.

Als Füll- und Verstärkungsstoffe eignen sich beispielsweise Glasfasern, Glimmer, Talkum, Calciummetasilicat und Quarz in Mengen bis zu 50 gew.-%, bezogen auf die Summe der Komponenten 1) und 2). Bevorzugte Stabilisatoren sind z. B. die organischen Ester der Phosphor- und phosphorigen Säure sowie sterisch gehinderte Phenole.

Als Flammschutzmittel sind die üblichen für Polyester verwendbaren Verbindungen geeignet, z. B. die aromatischen Halogenverbindungen, wie Decabromdiphenyläther, Decabromdiphenyl, Tetrabromphthalsäureanhydrid bzw. die Imide der Tetrabromphthalsäure sowie Polycarbonate, die einkondensierte Tetrabrombisphenol-A-reste enthalten. Darüber hinaus können synergistisch wirksame Verbindungen enthalten sein, wie z. B. Antimontrioxid, Polytetrafluorethylen und kolloidale Kieselsäure. Die Menge an Flammschutzmittel ist dem Verwendungszweck anzupassen. Im allgemeinen reicht eine Menge von <30 Gew.-%, bezogen auf die Summe der Komponenten 1) und 2), vollkommen aus.

Die folgenden Beispiele erläutern die Erfindung.

## Beispiele

### Herstellung der Polyolefin-Pfropfpolymerisate I – IV

Die in Tabelle 1 aufgeführten Pfropfprodukte I und II auf Basis Baylon(R) 19 N 430 (Hochdruckpolyethylen der Bayer AG) wurden in einem gleichsinnig rotierenden doppelwellen-Extruder mit selbstreinigendem Schneckenbesatz von 57 mm Wellendurchmesser D und 41 D Länge hergestellt. Die Kompression der Schmelze wurde durch Linksgewinde, Steigungssprünge und links versetzte Knetblöcke im zweigängigen variablen Wellenbesatz erreicht. Es wurden 400 l Luft pro Stunde mit 100 – 130 bar in die Induktionszone und 1200 l Luft pro Stunde mit 70 – 90 bar in die Oxidationszone gedrückt.

In die Polymerisationszone wurden die Pfropfmonomeren mit 15 – 18 bar eindosiert.

Die Pfropfung von Styrol und Acrylnitril bzw. n-Butylacrylat auf Buna (R)AP 407 (Ethylen-Propylen-Kautschuk der Buna-Werke Hüls) wurde in einem gegensinnig rotierenden Doppelwellen-Extruder vom Typ Point Eight der Firma Welding Inc. mit 20 mm Wellendurchmesser und 48 D Länge bei den in Tabelle 1 angegebenen Bedingungen ausgeführt (Pfropfprodukte III und IV). Die Kompression der Schmelze wurde durch Vergrößerung des Kerndurchmessers der Wellen in den Kompressionszonen erreicht. Die Wellen waren mit einer durchgehenden Steigung von 1 D ausgerüstet.

Es wurden 80 l Luft pro Stunde mit 40 – 60 bar in die Induktionszone und 240 l Luft pro Stunde mit 20 – 40 bar in die Oxidationszone gedrückt. In die Polymerisationszone wurden die Pfropfmonomeren mit 5 bar eindosiert. Anschließend wurden die nicht umgesetzten Monomeren verdampft, das Pfropfprodukt als Strang ausgedrückt und granuliert. Die Versuchsergebnisse sind in Tabelle 1 zusammengestellt.

Tabelle 1a

Herstellung der Polyolefin-Pfropfpolymerisate

| | Pfropfprodukt | | | |
|---|---|---|---|---|
| | I | II | III | IV |
| Durchsatz [kg/h] | 75 | 80 | 0,9 | 1,05 |
| Wellendrehzahl [U/min] | 100 | 107 | 110 | 100 |
| Mittlere Verweilzeit [min] | 2,3 | 2,1 | 6 | 6 |
| Peroxidgehalt nach Oxidation [ppm] | 1000 | 1200 | 1200 | 1200 |
| Mooney-Wert*) nach Oxidation | — | — | 45 | 44 |
| MFT**) bei 190°C nach Ox. [g/10 min] | 7,3 | 7,8 | — | — |
| Monomerdosierung [kg/h] | 11,3 | 4,5 | 0,12 | 0,195 |
| Monomerzusammensetzung | 20% AS | 100% t-BA | 72% S | 100% n-BA |
| | 80% n-BA | | 28% AN | |
| Umsatz [%] | 80 | 89 | 99 | 87 |
| Produktzusammensetzung | 1,1% AS | 5% t-BA | 11% S | 16% n-BA |
| | 11% n-BA | | 4% AN | |
| Restperoxidgehalt [ppm] | 300 | 250 | 600 | 540 |
| Mooney-Wert*) Pfropfprodukt | — | — | 47 | 20 |
| MFI**) bei 190°C Pfropfprod. [g/10 min] | 2,4 | 5,0 | — | — |

Erklärung der Abkürzungen:

AN Acrylnitril
AS Acrylsäure
n-BA n-Butylacrylat
t-BA tert.-Butylacrylat
S Styrol

Die Prozentangaben sind Gew.-%.

*) L 4 (100°C)
**) Melt Flow Index nach DIN 53 735, gemessen bei 190°C und 216 Kp Belastung: Meßdüse: 2,095 mm ∅, Länge: 8 mm.

Tabelle 1b

Schneckenbedingungen bei der Herstellung der Polyolefin-Pfropfpolymerisate

| | | Pfropfprodukt | | | | |
|---|---|---|---|---|---|---|
| | | I | II | | III | IV |
| Einzugszone | 2 D | 86° | 85° | 2 D | 110° | 110° |
| Aufschmelzzone | 4 D | 140° | 140° | 5 D | 190° | 190° |
| Kompressionszone | 1 D | 200° | 205° | 2 D | 200° | 200° |
| Induktionszone | 3 D | 220° | 225° | 3 D | 235° | 235° |
| Oxydationszone | 6 D | 210° | 210° | 6 D | 210° | 210° |
| Kompressionszone | 1 D | 200° | 200° | 2 D | 210° | 210° |
| Entgasungszone | 2 D | 190° | 190° | 4 D | 190° | 190° |
| Kompressionszone | 1 D | 200° | 200° | 2 D | 200° | 190° |
| Polymerisationszone | 1 D | 210° | 210° | 8 D | 210° | 190° |
| Kompressionszone | 1 D | 210° | 210° | 2 D | 210° | 190° |
| Verdampferzone | 6 D | 220° | 220° | 7 D | 200° | 190° |
| Extrusionszone | 3 D | 200° | 200° | 5 D | 200° | 190° |
| | 41 D | | | 48 D | | |

Die Temperaturen sind in Celsius-Graden angegeben.

**Beispiele 1 – 5**

**Die Einarbeitung der Polyolefin-Pfropfpolymerisate in Polybutylenterephthalat der Intrinsic-Viskosität 0,95 dl/g erfolgte in einem Zweiwellenextruder mit 32 mm Wellendurchmesser und selbstreinigendem Schneckensatz bei Temperaturen von 250 – 270° C.**

**Herstellung, Zusammensetzung und Eigenschaften der Mischungen sind in Tabelle 2 zusammengestellt.**

**Die Intrinsic-Viskosität in dl/g wurde in Phenol/o-Dichlorbenzol (Gewichtsverhältnis 1 : 1) gemessen und rechnerisch auf den eingesetzten Polyester bezogen.**

Tabelle 2

Herstellung, Zusammensetzung und Eigenschaften der Mischungen aus Polybutylenterephthalat und Olefinpfropfpolymerisat

| Beispiel | Pfropf-polymerisat Typ | Gew.-% | Massetemp. °C | Intrinsic-Viskosität dl/g | Schlag-zähigkeit[1]) kJ/m² | Kerbschlag-zähigkeit[1]) kJ/m² | Kugeldruck-härte[2]) MPa | Wärmeform-beständigk.[3]) n. Vicat °C | Schlagzähigk.[1]) nach 300 h/160 an Luft kJ/m² |
|---|---|---|---|---|---|---|---|---|---|
| 1 | II | 5 | 258 | 0,93 | n. g.[4]) | 3,0 | 114 | 173 | 70 |
| 2 | II | 20 | 268 | 0,92 | n. g. | 3,5 | 83 | 132 | 55 |
| 3 | I | 5 | 260 | 0,94 | n. g. | 3,0 | 115 | 174 | 60 |
| 4 | III | 5 | 263 | 0,92 | n. g. | 4,5 | 115 | 174 | 58 |
| 5 | IV | 5 | 264 | 0,93 | n. g. | 4,5 | 114 | 173 | 59 |

[1]) DIN 53 453.
[2]) DIN 53 456.
[3]) DIN 53 460.
[4]) n. g. = nicht gebrochen.

**Patentansprüche**

1. Mischung aus

1.) 60–99 Gew.-%, vorzugsweise 75–97 Gew.-%, thermoplastischer Polyester und
2.) 1–40 Gew.-%, vorzugsweise 3–25 Gew.-%, von Polyolefinpfropfpolymerisat, erhältlich aus
  a) 70–99 Gew.-%, vorzugsweise 75–97 Gew.-%, einer Pfropfgrundlage bestehend aus einem Homopolymerisat von aliphatischen und/oder aromatischen Monoolefinen oder einem Copolymerisat aus diesen Olefinen, bis zu 50 Gew.-% anderer mono-olefinisch ungesättigter, radikalisch polymerisierbarer Verbindungen und/oder bis zu 5 Gew.-% Diolefinen, und
  b) 1–30 Gew.-%, vorzugsweise 3–25 Gew.-% radikalisch pfropfbarer ethylenisch ungesättigter Verbindungen, wobei sich die unter 1) und 2) genannten Prozentangaben auf die Summe der Komponenten 1) und 2), die in der ersten Zeile von a) und b) genannten Prozentangaben auf die Summe der Komponenten a) und b) und die restlichen unter a) gemachten Prozentangaben auf die Summe der für die Herstellung der Pfropfgrundlage verwandten Ausgangsmonomeren beziehen,

dadurch gekennzeichnet, daß die Polyolefinpfropfpolymerisate 2) pro 400–2000 Kohlenstoffatome eine Pfropfstelle aufweisen und daß die Pfropfäste ein mittleres Molekulargewicht $\overline{M}_w$ von 2000 bis 40 000 besitzen, wobei die Polyolefinpfropfpolymerisate 2) derart hergestellt worden sind, daß man die Schmelze der Pfropfgrundlage a) unter einem Druck von 1–150 bar bei einer Temperatur von 80–300°C mit Sauerstoff oder Sauerstoff-haltigen Gasen unter intensiver Durchmischung maximal 10 Minuten in Kontakt bringt, unmittelbar danach bei Abwesenheit von Sauerstoff bzw. Sauerstoff-haltigem Gas unter intensiver Durchmischung die aufzupfropfenden ethylenisch ungesättigten Verbindungen b) zufügt und nach der Pfropfpolymerisation die Restmonomeren entfernt.

2. Mischungen nach Anspruch 1, dadurch gekennzeichnet, daß der thermoplastische Polyester ein Polyalkylenterephthalat mit einer Intrinsic-Viskosität von 0,6 bis 1,5 dl/g ist.

3. Mischungen nach Anspruch 2, dadurch gekennzeichnet, daß das Polyalkylenterephthalat Polyethylenterephthalat oder Polybutylenterephthalat ist.

4. Mischungen nach Ansprüchen 1 bis 3, dadurch gekennzeichnet, daß die Pfropfgrundlage a) Polyethylen, Polypropylen, Polybuten oder Polystyrol ist.

5. Mischungen nach Ansprüchen 1 bis 3, dadurch gekennzeichnet, daß die Pfropfgrundlage a) ein Copolymerisat aus mindestens zwei Monomeren der Gruppe Ethylen, Propylen, Buten, Styrol oder Acrylnitril ist.

6. Mischungen nach Ansprüchen 1 bis 5, dadurch gekennzeichnet, daß die Pfropfgrundlage a) bis zu 5 Gew.-% Reste von Diolefinen enthält.

7. Mischungen nach Ansprüchen 1 bis 6, dadurch gekennzeichnet, daß die Pfropfgrundlage a) bis zu 50 Gew.-% Reste radikalisch polymerisierbarer ethylenisch ungesättigter Verbindungen enthält.

8. Mischungen nach Ansprüchen 1 bis 7, dadurch gekennzeichnet, daß die Pfropfmonomeren b) aus der Gruppe Acrylsäure, Methacrylsäure, den Methyl-, Ethyl-, Propyl-, Butyl-, 2-Ethylhexyl- und Cyclohexylestern dieser Säuren, Acrylamid, Methacrylamid, Vinylacetat, Styrol, Maleinsäureanhydrid und Acrylnitril ausgewählt sind.

9. Verfahren zur Herstellung der Mischungen nach Ansprüchen 1–8, dadurch gekennzeichnet, daß man die Komponenten 1 und 2 auf an sich bekannte Weise homogenisiert.

10. Verwendung der Mischungen nach Ansprüchen 1–8 zur Herstellung von Formkörpern.

**Claims**

1. A mixture of

1.) 60–99% by weight, preferably 75–97% by weight, of thermoplastic polyesters and
2.) 1–40% by weight, preferably 3–25% by weight, of a polyolefin graft polymer, obtainable from
  a) 70–99% by weight, preferably 75–97% by weight, of a graft base consisting of a homopolymer of aliphatic and/or aromatic mono-olefins or of a copolymer of these olefins, up to 50% by weight of other mono-olefinically unsaturated, radically polymerisable compounds and/or up to 5% by weight of diolefins, and
  b) 1–30% by weight, preferably 3–25% by weight, of radically graftable ethylenically unsaturated compounds, the percentages quoted under 1) and 2) being based on the sum of components 1) and 2), the percentages quoted in the first line of a) and b) being based on the sum of components a) and b) and the remaining percentages quoted in a) being based on the sum of the starting monomers used for the production of the graft base,

characterised in that the polyolefin graft polymers 2) contain one grafting site for every 400–2000

carbon atoms and the graft branches have an average molecular weight $\overline{M}_w$ of 2000 to 40 000, wherein the polyolefin graft polymers 2) have been produced by bringing a melt of the graft base a) into contact with oxygen or oxygen-containing gases for at most 10 minutes with intensive mixing under a pressure of 1–150 bars and at a temperature of 80–300°C, adding the ethylenically unsaturated compounds b) to be grafted on immediately afterwards with intensive mixing in the absence of oxygen or oxygen-containing gas, and the residual monomers are removed after the graft polymerisation reaction.

2. Mixtures according to Claim 1, characterised in that the thermoplastic polyester is a polyalkylene terephthalate having an intrinsic viscosity of 0,6 to 1,5 dl/g.

3. Mixtures according to Claim 2, characterised in that the polyalkylene terephthalate is polyethylene terephthalate or polybutylene terephthalate.

4. Mixtures according to Claims 1 to 3, characterised in that the graft base a) is polyethylene, polypropylene, polybutene or polystyrene.

5. Mixtures according to Claims 1 to 3, characterised in that the graft base a) is a copolymer of at least two monomers from the group comprising ethylene, propylene, butene, styrene and acrylonitrile.

6. Mixtures according to Claims 1 to 5, characterised in that the graft base a) contains up to 5% by weight of residues of diolefins.

7. Mixtures according to Claims 1 to 6, characterised in that the graft base a) contains up to 50% by weight of residues of radically polymerisable ethylenically unsaturated compounds.

8. Mixtures according to Claims 1 to 7, characterised in that the graft monomers b) are selected from the group comprising acrylic acid, methacrylic acid, the methyl, ethyl, propyl, butyl, 2-ethylhexyl and cyclohexyl esters of these acids, acrylamide, methacrylamide, vinyl acetate, styrene, maleic acid anhydride and acrylonitrile.

9. Process for the production of the mixtures according to Claims 1–8, characterised in that the components 1 and 2 are homogenized in a manner known per se.

10. Use of the mixtures according to Claims 1–8 for the production of moulded articles.

**Revendications**

1. Mélange formé de

1.) 60 à 99% en poids, de préférence 75 à 97% en poids, de polyesters thermoplastiques et de
2.) 1 à 40% en poids, de préférence 3 à 25% en poids, d'un polymère polyoléfinique de greffage, pouvant être obtenu à partir de
   a) 70 à 99% en poids, de préférence 75 à 97% en poids, d'un substrat de greffage formé d'un homopolymère de mono-oléfines aliphatiques et/ou aromatiques ou d'un copolymère de ces oléfines, jusqu'à 50% en poids d'autres composés à non-saturation mono-oléfinique, susceptibles de polymérisation radicalaire et/ou jusqu'à 5% en poids de dioléfines, et de
   b) 1 à 30% en poids, de préférence 3 à 25% en poids, de composés à non-saturation éthylénique, susceptibles de greffage radicalaire, les indications de purcentages données en 1) et 2) se rapportant à la somme des composants 1) et 2), les indications de pourcentages données dans les premières lignes de a) et b) se rapportant à la somme des composants a) et b) et les autres indications de pourcentages données en a) se rapportant à la somme des monomères de départ utilisés pour la produktion du substrat de greffage,

caractérisé en ce que les polymères polyoléfiniques de greffage 2) présentent un point de greffage pour 400 à 2000 atomes de carbone et les greffons possèdent un poids moléculaire moyen $\overline{M}_p$ de 2000 à 40 000, les polymères polyoléfiniques de greffage 2) ayant été obtenus par le fait qu'on maintient en contact pendant 10 Minutes au maximum, avec brassage intense, la masse fondue du substrat greffé a) sous une pression de 1 à 150 bars à une température de 80 à 300°C avec de l'oxygène ou des gaz contenant de l'oxygène, on ajoute immédiatement après les composés b) à non-saturation éthylénique devant être fixés par greffage, en l'absence d'oxygène ou de gaz contenant de l'oxygène, sous brassage intense, et on élimine les monomères résiduels après la polymérisation par greffage.

2. Mélanges suivant la revendication 1, caractérisés en ce que le polyester thermoplastique est un polytéréphthalate d'alkylène ayant une viscosité intrinsèque de 0,6 à 1,5 dl/g.

3. Mélanges suivant la revendication 2, caractérisés en ce que le polytéréphthalate d'alkylène est le polytéréphthalate d'éthylène ou le polytéréphthalate de Butylène.

4. Mélanges suivant les revendications 1 à 3, caractérisés en ce que le substrat de greffage a) est un polyéthylène, polypropylène, polybutène ou polystyrène.

5. Mélanges suivant les revendications 1 à 3, caractérisés en ce que le substrat de greffage a) est un produit de copolymérisation d'au moins deux monomères du groupe de l'éthylène, du propylène, du butène, du styrène ou de l'acrylonitrile.

6. Mélanges suivant les revendications 1 à 5, caractérisés en ce que le substrat de greffage a) contient jusqu'à 5% en poids de résidus de dioléfines.

7. Mélanges suivant les revendications 1 à 6, caractérisés en ce que le substrat de greffage a) contient jusqu'à 50% en poids de résidus de composés à non-saturation éthylénique susceptibles d'une polymérisation radicalaire.

8. Mélanges suivant les revendications 1 à 7, caractérisés en ce que les monomères greffés b) sont choisis dans le groupe comprenant l'acide acrylique, l'acide méthacrylique, les esters de méthyle, d'éthyle, de propyle, de butyle, de 2-éthylhexyle et de cyclohexyle de ces acides, l'acrylamide, le méthacrylamide, l'acétate de vinyle, le styrène, l'anhydride d'acide maléique et l'acrylonitrile.

9. Procédé de production des mélanges suivant les revendications 1 à 8, caractérisé en ce qu'on homogénéise les composants 1 et 2 d'une manière connue.

10. Utilisation des mélanges suivant les revendications 1 à 8 pour la production de pièces moulées.